**Europäisches Patentamt**

**European Patent Office**

**Office européen des brevets**

(19)

(11) Veröffentlichungsnummer: **0 124 731**

**A1**

(12) ## EUROPÄISCHE PATENTANMELDUNG

(21) Anmeldenummer: **84103156.0**

(22) Anmeldetag: **22.03.84**

(51) Int. Cl.³: **G 01 B 7/14**
**G 01 D 5/22**

(30) Priorität: **07.04.83 CH 1879/83**

(43) Veröffentlichungstag der Anmeldung:
**14.11.84 Patentblatt 84/46**

(84) Benannte Vertragsstaaten:
**DE FR GB IT**

(71) Anmelder: **H.F. Stollberg Maschinenfabrik GmbH**
**Odenwaldstrasse 12-14**
**D-6124 Beerfelden(DE)**

(72) Erfinder: **Dorsch, Manfred Prof.**
**Weinbergstrasse 35-se**
**D-6962 Adelsheim(DE)**

(72) Erfinder: **Heinfling, Josef, Dr. Prof.**
**Im Fuchsloch 16**
**D-7101 Untergruppenbach(DE)**

(74) Vertreter: **Meyer, Reinhard, Dipl.-Ing.**
**c/o Dr. A. R. Egli & Co. Patentanwälte Horneggstrasse 4**
**CH-8008 Zürich(CH)**

(54) Verfahren und Vorrichtung zur berührungslosen Erfassung der Lage eines ersten Körpers bezüglich eines zweiten Körpers.

(57) Zu einer solchen Erfassung wird durch den als Leiter ausgebildeten Körper (I) ein Wechselstrom geschickt, durch den sich um den Leiter ein magnetisches Wechselfeld ausbildet, dessen Amplitude umgekehrt proportional mit dem Abstand vom Leiter abnimmt. Zur Messung der Stärke dieses Magnetfeldes werden zwei auf einem zweiten Körper (II) angeordnete Spulenpaare (2, 3; 4, 5) verwendet. Die Spannungsdifferenz der in den Spulen eines Spulenpaars induzierten Spannungen kann entweder zur Festlegung der Form des Körpers (I) oder zur Positionierung des Körpers (II) mit koaxialer Lage der Spulenpaare zum Körper (I) benützt werden. Während die Verwendung eines elektrischen Leitermaterials keine wesentliche Einschränkung darstellt, ist das Erfassungsverfahren weitgehend frei von Störeinflüssen.

FIG: 1

EP 0 124 731 A1

Verfahren und Vorrichtung zur berührungslosen Erfassung der Lage eines ersten Körpers bezüglich eines zweiten Körpers

---

Die Erfindung betrifft ein Verfahren zur berührungslosen Erfassung der Lage eines ersten Körpers bezüglich eines zweiten Körpers, wobei die Abstände zwischen den Körpern in verschiedenen Richtungen des Raums festgestellt werden, und eine Vorrichtung zu dessen Durchführung.

Die Aufgabe, einen Körper bezüglich seiner Lage zu einem andern Körper berührungslos festzulegen oder die gegenseitige Lage der Körper zu messen, tritt in verschiedenen Arbeitsgebieten auf. Hierbei werden die gemessenen Abstände dazu verwendet, entweder die Konturen des Körpers, beispielsweise mit Hilfe eines Rechners, in Form von Koordinaten festzulegen, die einer Produktionsmaschine zur Herstellung des gemessenen Körpers oder einer automatischen Zeichenmaschine zur bildlichen Darstellung desselben eingespeist werden, oder einer Regelungsvorrichtung zuzuführen, durch die eine bestimmte Lage der beiden Körper zueinander während ihrer Bewegung geregelt wird.

Für das berührungslose Messen von Abständen sind Radar-Verfahren, d.h. die Benutzung elektromagnetischer Wellen für das Auffinden und Orten von reflektierenden Gegenständen, bekannt. Diese sind jedoch aufwendig und zudem mit Mängeln behaftet, z.B. bei schlechter Reflexion des zu messenden Körpers. Eine praktische Anwendung hat ein Radar-Verfahren bei einer Vorrichtung zum Bewickeln von Leitern (Zeitschrift Le Trefile 3/1981 Seite 97) gefunden.

Hier setzt die Erfindung ein, der die Aufgabe zugrundeliegt, ein Verfahren der eingangs beschriebenen Art so auszugestalten, dass unter Vermeidung der Nachteile des Standes der Technik die berührungslose Lageerfassung zweier Körper in einfacher Weise und unter weitgehender Ausschaltung von Störeinflüssen möglich ist.

Diese Aufgabe wird gemäss der Erfindung dadurch gelöst, dass durch den aus einem elektrischen Leitermaterial bestehenden ersten Körper ein Wechselstrom geschickt wird, in dessen magnetischem Wechselfeld mindestens zwei auf dem Körper gelagerte Spulenpaare mit gegenüberliegenden Spulen angeordnet sind, derart, dass die in den Spulenpaaren induzierten Spannungen zur Zentrierung des zweiten Körpers zum ersten Körper oder zur Abstandsbestimmung zwischen den beiden Körpern gemessen und verarbeitet werden.

Die Erfindung umfasst auch eine Vorrichtung zur Durchführung des erfindungsgemässen Verfahrens, bei der von einem Wechselstrom durchflossene erste Körper von mindestens zwei Spulenpaaren mit je einer beidseits dieses Körpers angeordneten Spule umgeben ist, die die Fühler einer Mess- oder einer Regelvorrichtung bilden und mit dem zweiten Körper verbunden sind.

Die Erfindung ist in der Zeichnung in einigen Ausführungsbeispielen dargestellt und nachfolgend beschrieben. Es
zeigen:

Fig. 1        eine Vorrichtung zum berührungslosen Positionie-
              ren zweier Körper in schematischer, vereinfachter Darstellung,

Fig. 2        eine Vorrichtung zur berührungslosen Lageerfassung zweier Körper in schematischer Darstellung,

Fig. 3        ein Schaltschema der Regelungsvorrichtungen zur
              Lageerfassung zweier Körper nach Fig. 2 in vereinfachter Darstellung,

Fig. 4        ein Schaltschema für eine der Regelvorrichtungen
              nach Fig. 3,

Fig. 5        eine schematische Darstellung der Positionierung
              zweier Körper, von denen der eine ein gebogener,
              stabförmiger Körper ist,

Fig. 6        ein Schaltschema einer Positioniervorrichtung für
              das Umbandeln von mindestens teilweise gebogenen
              elektrischen Leitern,

Fig. 7        eine Seitenansicht einer Umbandelmaschine zum Umbandeln von elektrischen Leitern,

Fig. 8        die Rahmenteile des Umbandelkopfes der Umbandelmaschine nach Fig. 7 in räumlicher Darstellung
              und

- 4 - 0124731

Fig. 9     einen Schnitt des Umbandelkopfes längs der Linie
           IX - IX in Fig. 7.

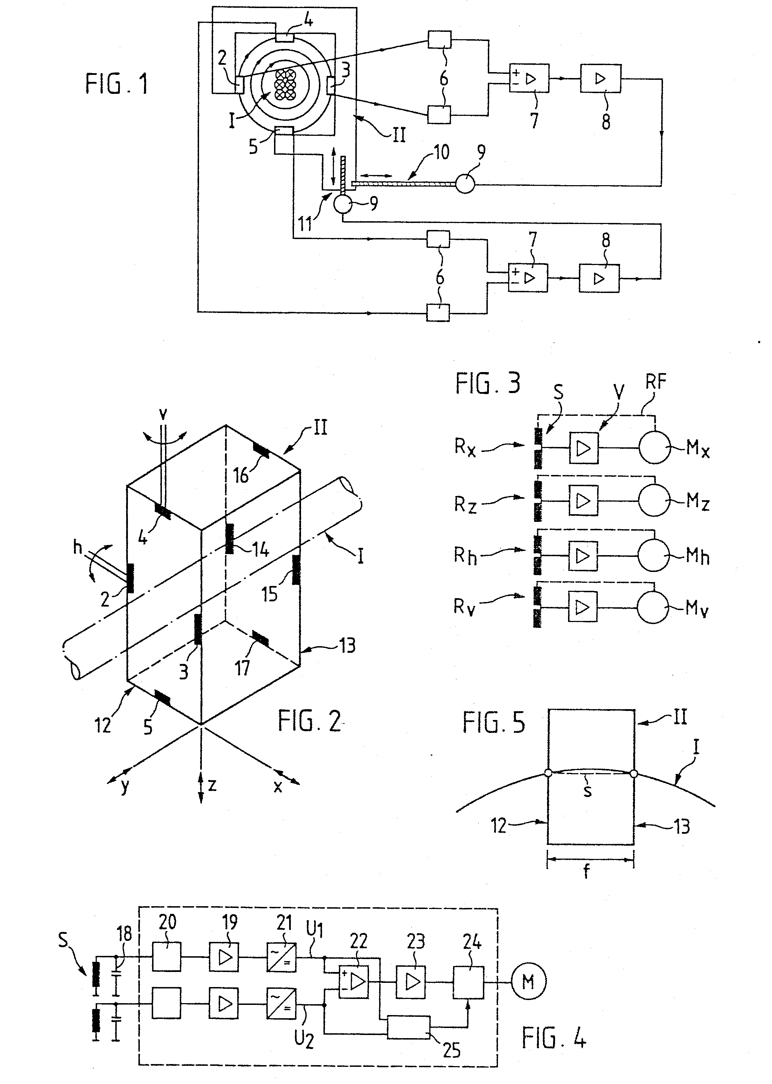

Die in Fig. 1 dargestellte Positioniervorrichtung arbeitet
nach einem grundsätzlich andern Prinzip als nach dem Prinzip
der Reflexion elektromagnetischer oder anderer Wellen, z.B.
Lichtwellen, die alle leicht durch Fremdeinflüsse gestört
werden können, und zwar mit Hilfe eines Magnetfeldes. Dies
setzt voraus, dass der eine Körper aus einem elektrischen
Leitermaterial besteht, während der andere Körper aus einem
Material besteht, durch das das Magnetfeld nicht gestört
wird. Diese Einschränkung stellt keine besondere Erschwerung in der Anwendung des Verfahrens dar, da der Körper gegebenenfalls leitend gemacht werden kann.

In Fig. 1 ist ein Leiter I dargestellt, der von einem ringförmigen Körper II umgeben ist. Der Körper II kann
auch jede andere Form aufweisen, jedoch ist dieser mit einem
Teilkörper versehen, der den Leiter I ringförmig umgibt.
Nun wird ein Wechselstrom durch den Leiter I geschickt, um
den sich symmetrisch ein magnetisches Wechselfeld ausbildet
(durch mit Pfeilen versehene Kreise dargestellt) dessen
Amplitude umgekehrt proportional mit dem Abstand vom Leiter I
abnimmt. Als Mass für die Positionierung des Leiters oder
Körpers I wird die Stärke dieses Magnetfeldes verwendet.
Hierzu werden um den Leiter I zwei Spulenpaare 2, 3 und 4, 5
am Körper II angeordnet, von denen das Spulenpaar 4, 5 für die Messung
in horizontaler Richtung und das Spulenpaar 4, 5 in vertikaler Richtung dient. In den Spulen dieser Spulenpaare werden
Spannungen induziert, die proportional der Amplitude des
Magnetfeldes sind. Befindet sich der Leiter I nicht in der
Mitte der Spulenpaare, wird in einer der Spulen eine grössere Spannung als in der andern induziert. Die Spannungen werden in Gleichrichtern 6 gleichgerichtet und auf einen
Differenzverstärker 7 gegeben, der die Differenz aus den
beiden Spannungswerten bildet. Diese Differenz treibt nach
weiterer Verstärkung in einem Verstärker 8 je einen Motor
9 an, der über ein mechanisches Getriebe, z.B. einen Spindelantrieb 10, 11, den Körper II solange verstellt, bis die
Spannungsdifferenz in den beiden Spulenpaaren 2, 3 und 4, 5
Null ist. In diesem Zustand befindet sich der Leiter genau
in der Mitte zwischen den Spulenpaaren. Die Spulenpaare
bilden zusammen mit ihren Spindelantrieben Regelkreise, bei
denen eine Fehlerabweichung, hier die Differenzspannung
eines Spulenpaares zur Nachführung des Körpers II ausgenützt wird.

Eine Störung der Regelkreise entsteht nur bei Störungen
des Magnetfeldes durch ferromagnetische Stoffe. Wenn jedoch
die Spulen näher, d.h. einige Zentimeter, am Körper I
liegen als der Körper II, ist keine wesentliche Störung
des Magnetfeldes zu erwarten, selbst wenn der Körper II
aus einem ferromagnetischen Material besteht, was jedoch
in den meisten Fällen nicht erforderlich ist. Wird der Körper I bewegt, z.B. längs zum Körper II, wird durch die
beschriebene Mess- und Regeleinrichtung die Lage des Körpers
II so verstellt, dass der Körper I immer in der Mitte der
Spulenpaare 2, 3 und 4, 5 liegt.

Ist der Körper I ein gebogener oder gekrümmter stabförmiger
Körper und wird zudem verlangt, dass der Körper II sich
immer mit einer bestimmten Winkellage zum Körper I einstellt,
ist hierfür die Vorrichtung nach Fig. 1 nicht ausreichend,
sondern es ist dann eine Lageerfassung-Vorrichtung nach
Fig. 2 zu verwenden.

In Fig. 2 ist der Körper I ein gerader oder gekrümmter Stab, während der Körper II, d.h. der den Körper I umgebende Teil, als quaderförmiges Gitter dargestellt ist. Dieses Gitter ist ein starres Gebilde und weist zwei zueinander parallele Rahmen 12, 13 auf. Der Rahmen 12 trägt die bereits bekannten Spulenpaare 2, 3 und 4, 5, während der Rahmen 13 zwei weitere Spulenpaare 14, 15 und 16, 17 trägt, die in gleicher Weise wie die Spulenpaare des Rahmens 12 angeordnet sind. Die Spulenpaare sind die Sensoren oder das Messglied von im ganzen vier Regelkreisen. Damit die Rahmen 12, 13 immer senkrecht zum Körper I stehen, greifen die Stellantriebe für die Regelkreise des Rahmens 13 ebenfalls in der Ebene des Rahmens 12 am Körper II an. Es werden somit vier Regelantriebe benötigt, die in Fig. 3 schematisch dargestellt sind, d.h. je ein Regelantrieb für die Bewegung des Rahmens 12 in Richtung der Fühler 2, 3 (x-Achse), 4, 5 (z-Achse), 14, 15 (horizontale Drehachse h) und 16, 17 (vertikale Drehachse v). Die vier Regelantriebe $R_x$, $R_z$, $R_h$, $R_v$ sind in Fig. 3 schematisch mit einem Spulenpaar S, einer Verstärkerstufe V, die auch die Gleichrichtung und den Spannungsvergleich enthält, einen Stellmotor $M_x$, $M_z$, $M_h$, $M_v$ und einer mechanischen Rückführung RF dargestellt.

In Fig. 4 ist ein Regelantrieb für ein Spulenpaar etwas ausführlicher dargestellt. Parallel zu den einzelnen Fühlerspulen eines Spulenpaars S liegt ein Kondensator 18, so dass die beiden Spulen in der Resonanz des Schleifenstromes als Schwingkreis arbeiten. Zwischen diesem Schwingkreis und einem Verstärker 19 liegt ein Filter 20, durch das Störspannungen, die trotz der abgestimmten Resonanzkreise noch entstehen, z.B. durch starke 50 Hz-Felder einschliesslich ihrer Oberwellen, ausgefiltert werden. Die Verstärker 19 verstärken die Wechselspannung derart, dass die darauffolgende Gleichrichtung nicht mehr im gekrümmten Bereich
von Gleichrichterdioden verläuft. Die Gleichrichter 21
erzeugen eine der Wechselspannung des Resonanzkreises proportionale Gleichspannung $U_1$ und $U_2$, die einer Differenzverstärkerstufe 22 zugeführt werden. Bei Gleichheit der
beiden Spannungen ist der Ausgang der Differenzverstärkerstufe 22 Null und es wird in dem nachfolgenden Verstärker 23
kein Signal verstärkt, so dass schliesslich die Endstufe
24, die mit einer Schaltstufe 25 in Verbindung steht, keine
Spannung an den Motor M abgibt, der damit seine momentane
Lage beibehält. Befindet sich jedoch der abzutastende Körper 2 nicht in der Mitte zwischen dem Spulenpaar S, sind
die beiden Spannungswerte $U_1$ bzw. $U_2$ nicht gleich. Je nachdem, welche der beiden Spannungen grösser ist, erhält die
Differenzspannung ein anderes Vorzeichen, so dass der Motor
entweder in der einen oder in der andern Richtung läuft und
sinngemäss das Spulenpaar zur Mitte des Körpers I verstellt.

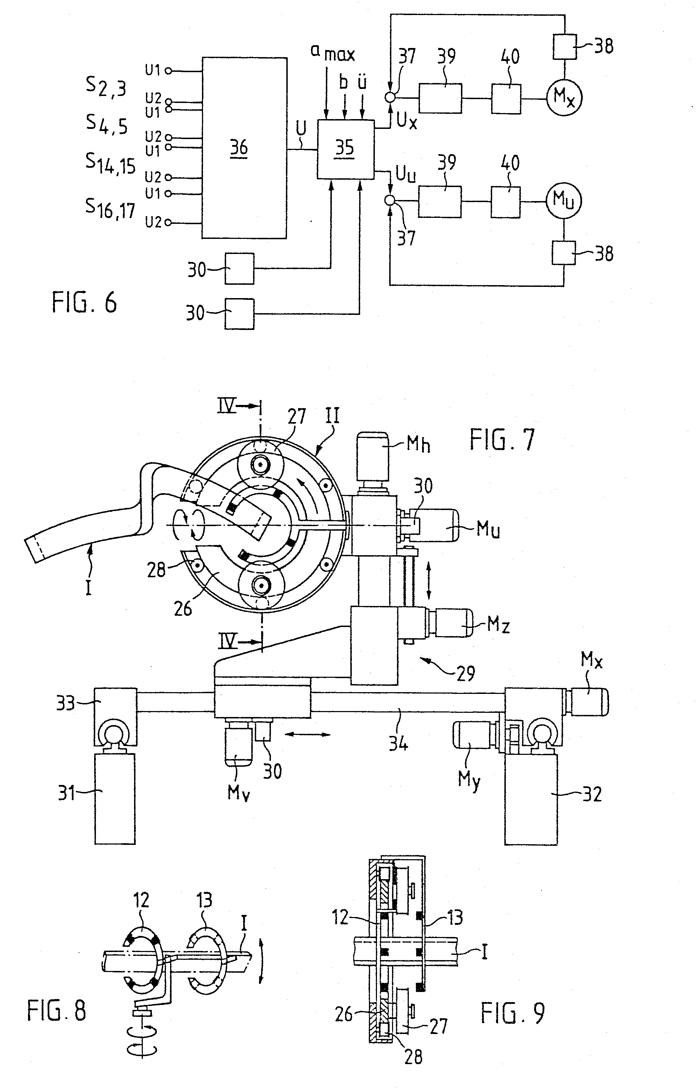

In Bild 5 ist die Lageeinstellung des Körpers II zu einem
gekrümmten Körper I dargestellt. Die Spulenpaare 2, 3 bewegen mit ihren Regelantrieben den Rahmen 12 in die Mittenlage zum Körper I, während die Spulenpaare 14, 15 und 16, 17
durch die in der Ebene des Rahmens 12 angeordneten Regelantriebe dieser Spulenpaare den Rahmen 13 um die horizontale
und vertikale Drehachse solange verstellen, bis auch der Rahmen 13 seine Mittenlage zum Körper I einnimmt. Da die Regelantriebe $R_h$ und $R_v$ in der Ebene des Rahmens 12 liegen, wird
nicht seine Mittenlage, sondern nur die Neigung zum Körper I
solange verstellt, bis der mit dem Rahmen 12 festverbundene
Rahmen 13 ebenfalls seine Mittenlage eingenommen hat. Man
sieht aus dieser schematischen Darstellung in Fig. 5, dass
der Körper II mit 4 Spulenpaaren so gesteuert werden kann,

- 8 -

0124731

dass er immer senkrecht zur gestrichelt dargestellten Sehne
s als Verbindung zwischen den Mitten der beiden Rahmen 12,
13 steht. Es können somit auch Körper I beliebiger Form und
Ausdehnung abgetastet werden.

Wird die in Fig. 2 beschriebene Vorrichtung zusammen mit
ihren Regelantrieben als Umbandelkopf ausgebildet, mit dem
Körper I, z.B. Leiter, umbandelt werden, kann hierzu die in
Fig. 7 dargestellte Umbandelmaschine verwendet werden. Der
Körper II ist hierbei als ringförmiger Umbandelkopf dargestellt, innerhalb welchem eine, mit einem Antrieb $M_U$ versehene, rotierende Umbandelvorrichtung 26 mit zwei Umbandelungsspulen 27 auf Rollen 28 drehbar gelagert ist.

Der Körper II bzw. der Umbandelkopf ist auf einem Ständer
29 um die horizontale Achse schwenkbar sowie heb- und senkbar mit den Antrieben $M_z$ und $M_h$ der entsprechenden Regelantriebe $R_z$ und $R_h$ abgestützt. Die Drehung um die vertikale
Achse besorgt der Antrieb $M_v$, wobei den beiden Regelantrieben $R_h$ und $R_v$ je ein Winkelgeber 30 als Teil der mechanischen Rückführung zugeordnet ist.

Beim Umbandeln eines Leiters ist ein kontinuierlicher Vorschub des Körpers II bzw. des Umbandelkopfes erforderlich, wozu ein
Vorschubantrieb $M_y$ mit einem entsprechenden Regelantrieb
$R_y$ dient. Der Antrieb $M_y$ verschiebt eine auf zwei Sockeln
31, 32 gelagerten Tisch 33, auf dem der Ständer 29 abgestützt ist. Die Verschiebung des Ständers 29 in der x-Achse
erfolgt durch den Antrieb $M_x$ des Regelantriebes $R_x$, z.B.
durch einen Spindeltrieb.

Um beim Umbandeln des Leiters beim Uebergang von einem
geraden auf ein gekrümmtes Leiterstück eine gleichmässige
Umbandelung zu erhalten, müssen der Vorschub, d.h. der Regelantrieb $R_y$ und die Wickelgeschwindigkeit, d.h. der Regelantrieb $R_U$ in Abhängigkeit des Krümmungsradius verändert werden, wozu ein Rechner 35 eingesetzt wird (Fig. 6). Die Spannungen der Spulenpaare $S_{2,3}$, $S_{4,5}$, $S_{14,15}$ und $S_{16,17}$ einem Umkehrverstärker 36 zugeleitet, der auch das Differenzierglied enthält. Die daraus gebildete Spannung U hat ihr Maximum, wenn keine Aenderungen der Spannungen in den genannten Spannungspaaren feststellbar ist. Aendert sich eine Spannung $U_1$ oder $U_2$, so wird in Abhängigkeit von der Aenderungsgeschwindigkeit die Spannung U vermindert, so dass diese Spannung ein Mass für die Krümmungen des abzutastenden Leiters sind. Ist U gross, ist keine Krümmung vorhanden und nimmt U ab, liegt eine entsprechende Krümmung vor.

Um die resultierende Bewegungsrichtung des Ständers 29 zu ermitteln, werden auch die Werte der beiden Winkelgeber 30 in den Rechner 35 eingegeben, dazu die Werte für die maximale Geschwindigkeit $a_{max}$, für die Bandbreite b und die Bandüberlappung ü. Vom Rechner werden entsprechende Spannungswerte, z.B. $U_x$ für die Bewegung in der x-Achse und $U_U$ für die Umbandelgeschwindigkeit auf Vergleicher 37 gegeben, wo der Vergleich mit einer vom jeweiligen Antrieb $M_x$ bzw. $M_U$ in einem Tachogenerator 38 erzeugten Spannung erfolgt. Eine etwaige Differenz dieser beiden Spannungen wird über ein Regelglied 39 und eine Endstufe 40 zur Regelung der Geschwindigkeit des entsprechenden Antriebes benützt. Mit Hilfe der Schaltung nach Fig. 6 kann somit die tatsächliche Vorschubgeschwindigkeit des Umbandelkopfes bzw. des Körpers II bezüglich des Leiters bzw. Körpers I ermittelt und dadurch die Umbandelgeschwindigkeit festgelegt werden, damit das Verhältnis dieser beiden Werte immer konstant gehalten ist.

In Fig. 8 und 9 sind noch Details des Umbandelkopfes nach
Fig. 7 dargestellt, wobei Fig. 8 die beiden Rahmen 12,
13 und ihre starre Verbindung in räumlicher Darstellung
zeigt, während Fig. 9 einen Schnitt durch den Umbandelkopf zeigt. Der Abstand f der beiden Rahmen 12, 13 ist möglichst klein zu wählen, muss jedoch mindestens die doppelte
Bandbreite aufweisen. Immerhin soll der Unterschied zwischen
der Sehne s und dem zugehörigen Bogen, siehe Fig. 5, möglichst klein sein, da sonst die senkrechte Wickelrichtung
des Bandes auf den abzutastenden Leiter nicht mehr exakt
eingehalten werden kann.

Soll die beschriebene Vorrichtung zum automatischen Vermessen des Körpers I, z.B. in Form von Auspuffrohren, Hydraulikrohren, gebogenen Matallkonstruktionen verwendet werden,
können an den einzelnen Bewegungsachsen, ausser beim Umbandelantrieb $M_U$, inkrementale Winkelschrittgeber oder andere Wegerfassungssysteme angebaut werden, die die jeweiligen Positionen an einen Rechner weiterleiten, der dann aus den Werten die x-y-z-Koordinaten errechnet, nach denen dann beispielsweise ein Biegeprogramm oder ein Programm für eine
automatische Zeichenmaschine erstellt werden kann.

Patentansprüche

1. Verfahren zur berührungslosen Erfassung der Lage eines ersten Körpers bezüglich eines zweiten Körpers, wobei die Abstände zwischen den Körpern in verschiedenen Richtungen des Raums festgestellt werden, dadurch gekennzeichnet, dass durch den aus einem elektrischen Leitermaterial bestehenden ersten Körper (I) ein Wechselstrom geschickt wird, in dessen magnetischem Wechselfeld mindestens zwei auf dem zweiten Körper (II) gelagerte Spulenpaare mit gegenüberliegenden Spulen (2, 3; 4, 5) angeordnet sind, derart, dass die in den Spulenpaaren induzierten Spannungen zur Zentrierung des zweiten Körpers (II) zum ersten Körper (I) oder zur Abstandsbestimmung zwischen den beiden Körpern gemessen und verarbeitet werden.

2. Verfahren nach Anspruch 1, dadurch gekennzeichnet, dass die Spulenpaare in einer einzigen Ebene angeordnet werden.

3. Verfahren nach Anspruch 1, dadurch gekennzeichnet, dass die Spulenpaare in zwei parallelen Ebenen angeordnet werden.

4. Verfahren nach Anspruch 1, dadurch gekennzeichnet, dass von den beiden in den Spulen eines Spulenpaares ermittelten Spannungen die Spannungsdifferenz gebildet und dieser Wert als Regelabweichung eines Regelantriebs zur Korrektur der Lage der Spulenpaare verwendet wird.

5. Verfahren nach einem der Ansprüche 1 bis 4, dadurch gekennzeichnet, dass zur Ausrichtung des zum ersten Körper (I) bewegten zweiten Körpers (II) bei Krümmungen die Aenderungen der Spannungsdifferenzen $(U_1-U_2)$ mindestens eines Spulenpaares gemessen, einem Rechner (35) eingegeben und zur vorgegebenen lagerichtigen Anordnung des zweiten Körpers bezüglich des ersten Körpers verwendet werden.

6. Verfahren nach Anspruch 4, dadurch gekennzeichnet, dass die Geschwindigkeit des zweiten Körpers zur Einhaltung eines konstanten Vorschubes längs der Krümmungsoberfläche verändert wird.

7. Vorrichtung zur Durchführung des Verfahrens nach einem der Ansprüche 1 bis 6, dadurch gekennzeichnet, dass der von einem Wechselstrom durchflossene erste Körper (I) von mindestens zwei Spulenpaaren (S) mit je einer beidseits dieses Körpers angeordneten Spule (2, 3; 4, 5; 14, 15; 16, 17) umgeben ist, die die Fühler einer Mess- oder einer Regelvorrichtung (6 - 10) bilden und mit dem zweiten Körper (II) verbunden sind.

8. Vorrichtung nach Anspruch 7, dadurch gekennzeichnet, dass die Messvorrichtung einen Teil des zweiten Körpers (II) bildet und ein den ersten Körper (I) umgebendes Gitter mit zwei parallelen, fest miteinander verbundenen Rahmen (12, 13) aufweist, welche Rahmen je zwei Spulenpaare (2, 3; 4, 5 und 14, 15; 16, 17) tragen.

9. Umbandelmaschine mit einer durch einen Antrieb ($M_y$) längs des ersten Körpers (I) bewegten Vorrichtung nach Anspruch 7 oder 8, dadurch gekennzeichnet, dass der als Umbandelkopf ausgebildete zweite Körper (II) auf einem Ständer (29) abgestützt ist, der zwei an einem der Rahmen (12) angreifende, mit horizontaler und vertikaler Schwenkachse versehene Schwenkantriebe ($M_h$, $M_v$) und einen in Richtung des einen Spulenpaars (4, 5) dieses Rahmens liegenden linear wirkenden Antrieb ($M_z$) sowie einen Umbandelantrieb ($M_U$) aufweist, wobei ein in Richtung des anderen Spulenpaars (2, 3) dieses Rahmens liegender weiterer linear wirkenden Antrieb ($M_x$) an einem, für die verschiebbare Lagerung des Ständers (29) ausgebildeten Tisch (33) angeordnet ist.

FIG. 1

0124731

FIG. 3

FIG. 2

FIG. 5

FIG. 4

$S_{2,3}$

$S_{4,5}$

$S_{14,15}$

$S_{16,17}$

$U1$ $U2$ $U1$ $U2$ $U1$ $U2$ $U1$ $U2$

$a_{max}$ $b$ $ü$

$U$

$\underline{36}$ $\underline{35}$

$30$ $30$

$U_x$ $37$ $39$ $40$ $38$ $M_x$

$U_u$ $37$ $39$ $40$ $M_u$ $38$

FIG. 6

FIG. 7

IV

$27$ II

$M_h$

$30$

$M_u$

$28$ $26$

$M_z$

IV

$29$

$33$ $M_x$

$34$

$31$ $M_v$ $30$ $M_y$ $32$

FIG. 8

$12$ $13$ I

FIG. 9

$12$ $13$

I

$26$ $27$

$28$

0124731

Nummer der Anmeldung

**Europäisches Patentamt**

# EUROPÄISCHER RECHERCHENBERICHT

## EINSCHLÄGIGE DOKUMENTE

EP 84103156.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | AT - B - 190 289 (WIENER KABEL) <br> * Gesamt * <br><br> -- | 1,2,4, 5,7,8 | G 01 B 7/14 <br> G 01 D 5/22 |
| A | GB - A - 1 586 807 (KRUPP) <br> * Gesamt * <br><br> -- | 1,2,4, 5,7,8 | |
| Y | CH - A5 - 599 535 (SCHOLZ) <br> * Gesamt * <br><br> -- | 1,2,7 | |
| Y | DE - A - 2 102 058 (HOESCH) <br> * Gesamt * <br><br> -- | 1,2,7 | |
| A | DE - B - 1 275 291 (ASSOCIATED ELECTRICAL) <br> * Gesamt * <br><br> ---- | 1,2,7 | |

RECHERCHIERTE SACHGEBIETE (Int. Cl. 3)

G 01 B 7/00

G 01 R 21/00

G 01 D 5/00

G 01 R 33/00

Der vorliegende Recherchenbericht wurde für alle Patentansprüche erstellt.

| Recherchenort | Abschlußdatum der Recherche | Prüfer |
|---|---|---|
| WIEN | 16-07-1984 | TOMASELLI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82